# EUROPEAN PATENT APPLICATION

(11) **EP 4 656 469 A1**
(43) Date of publication of application: **03.12.2025**
(21) Application number: 25382196.1
(22) Date of filing: 05.03.2025
(51) Int. Cl.: B60S 3/04, G01S 17/89, G01S 17/93, G08B 29/02, G06T 7/292

(54) **SAFETY SYSTEM AND METHOD FOR AUTOMATIC VEHICLE WASHING FACILITIES**

(30) Priority: 30.05.2024 ES 202430436
(71) Applicant: Istobal, S.A., 46250 La Alcudia (Valencia) (ES)
(72) Inventor: TOMÁS ALFARO, Rafael, 46250 L´Alcudia (Valencia) (ES)
(74) Representative: Temiño Ceniceros, Ignacio

(57) **Abstract**

The present invention relates to a safety system for automatic vehicle washing facilities comprising a series of movable apparatuses in an area of influence of the apparatuses, which is characterised in that it comprises one or more lidar formed by a series of laser transmitters and receivers, managed by a control unit, and configured for detecting the presence of objects or persons in the area of influence, and issuing an alert; and a safety method that is carried out with the aforementioned system.

## Description

### TECHNICAL FIELD

The present invention relates to a safety system in automatic vehicle washing facilities that increases the physical safety of users and technicians by applying improved presence control measures. It also helps to prevent damage to the vehicle and to the facilities themselves.

It introduces a safety assistance system specifically designed for vehicle washing facilities, taking advantage of advanced lidar technology. This system excels in its ability to execute safety operations in an accurate and timely manner in response to risk events that may arise in both fixed and movable areas within the washing bay.

### STATE OF THE ART

The use of vehicle washing tunnels, both for passenger cars and industrial vehicles, where a bridge moves along the vehicle to wash same by means of a system of brushes and jets of air and soapy water is known in the state of the art.

This implies that there are several movable parts that can harm a person passing through the area of influence thereof. It is therefore necessary to ensure that an automatic stop occurs if a user exits the vehicle or intends to approach the vehicle.

EP3808616A1 discloses a safety system using cameras to detect the presence of people in the washing tunnel. This system is reasonably effective but is focussed on the presence of people, so that the presence of unmovable objects, which can damage the washing tunnel apparatuses, is not adequately detected.

However, this system requires quite complex lighting to avoid the presence of shadows, especially with the movement of the washing apparatuses. Otherwise, the movement of shadows and the appearance of reflections produce false positives or, more seriously, false negatives.

Moreover, cameras are sensitive to moisture and water droplets on the lens or glass, due to splashing or condensation.

In addition, the response time of the cameras is high, as the system has to go through a series of steps to remove information that it considers irrelevant, which in itself may imply an error.

Finally, camera systems are relatively insensitive, especially for the reasons outlined above, so that the opening of a door is only detected when the risk is already very high or the user is about to get out of the vehicle. These systems take one or more 2D images and an algorithm decides whether the situation is dangerous. However, the situation may be difficult to appreciate properly because of external problems that mislead the algorithm.

A second embodiment is shown in JP2004203253A, where objects are detected by means of photoelectric sensors. This system is very deficient, as it can only detect the presence of elements at specific points between the transmitter and receiver of the photoelectric sensors, and therefore does not detect many risk situations.

The applicant is not aware of any system similar to that of the invention.

### BRIEF EXPLANATION OF THE INVENTION

The invention is a safety system in automatic vehicle washing systems according to the claims. It also refers to a safety method where the above-mentioned system is used. The present invention solves, in its various embodiments, the problems of the prior art.

This system aims to detect possible dangerous events, for the apparatuses or for the people, within the surveillance area. When a risk situation is identified, the system sends an alert message to the tunnel controller, allowing it to perform an adequate safety operation to mitigate the hazard. The safety operation, for example, includes stopping or slowing down apparatuses, or performing a reversal of motion. It is to be understood that an automatic facility can be a bay or a tunnel for washing vehicles, e.g. cars.

The system also makes it possible to check that the vehicle is in the correct position, so that the washing operation is not started if there is any risk. It can also detect if the vehicle is moving because the handbrake is not applied, or if the vehicle has parts that are incorrectly positioned: mirrors folded out, windows down, etc.

The main objective of the system is to prevent accidents and to protect the safety of users and vehicles during the washing process. By using lidar technology, the system is able to detect objects with high accuracy and in real time, even under low visibility conditions such as darkness or rain, as well as under conditions where there are droplets and fog. This provides an additional safety layer that complements traditional sensor and camera systems used in conventional vehicle washing systems.

The central concept of the system is the acquisition of a detailed description of the volumes present in the automatic washing facility, thus allowing a constant monitoring of these spaces. Through this process, the system discriminates the expected elements to be found, such as the vehicle being washed and the apparatuses on the washing bridge. Any deviation from this expected scenario generates a warning signal interpreted by the washing machine or washing apparatuses. An outstanding aspect of the invention is its ability to anticipate possible risk situations by recognising specific events within the detected volumes. For example, the system can identify the opening of a vehicle door, an action that could compromise the safety of the exiting user.

In addition to this essential function, the system effectively addresses common challenges in the current state of the art. It is able to operate reliably even in complex environments, including those where water and chemicals are present, without compromising the safety of users, maintenance technicians or facility operators.

Lidar allows measurements to be taken directly from the physical elements, in 3D, which greatly improves the anticipation of events. Incidentally, it also avoids data protection issues, making it legally simpler.

For this purpose, the safety system in automatic vehicle washing facilities, which is incorporated into a vehicle washing facility comprising a series of movable apparatuses in the tunnel or bay in an area of influence, comprises a lidar consisting of a series of laser transmitters and receivers, managed by a control unit. The lidar is configured for detecting the presence of objects in the area of influence, and issuing an alert. In this sense, the system is designed to determine static and dynamic volumes. For this purpose, the lidar allows information to be obtained from a 3D volume in the area of influence of the apparatuses. The safety system can be built into the facility as standard or retrofitted and connected to the facility manager.

Therefore, the invention consists of a safety system in automatic vehicle washing facilities comprising a series of movable apparatuses in an area of influence of the apparatuses, which is characterised in that it comprises one or more lidar made up of a series of laser transmitters and receivers, managed by a control unit and configured for detecting the presence of objects or persons in the area of influence, preferably configured for evaluating the volume of the objects present in the facility by checking that their dynamic state is compatible with safe operation at all times; and configured for issuing an alert, wherein a signal can be generated that can trigger a safety sequence in case the dynamic state is incompatible. The control unit is prepared to receive data from the washing unit via an interface.

In this sense, the following functionalities are not limiting, the system is characterised in that it is configured so that an unsafe operation that is caused by a change in the volume of the objects present, as may be the appearance of a new volume, e.g. the volume of a person, animal or object, is detected. It can also detect an unsafe operation caused by a change in the volume of the objects present, such as a change or deformation of a static volume present in the facility, e.g. a change in volume when a vehicle door is opened. It can also detect an unsafe operation is caused by the change in volume of objects present due to the displacement of an existing volume, e.g. vehicle movement. Additionally, it can detect an unsafe operation caused by the change or deformation of a dynamic volume present in the facility, e.g. the opening of the door of the washing apparatus. In addition, the system is also configured so that a signal can be generated in case the volume of the static elements interferes with the expected trajectory of the dynamic volume. The system has a volume classifier to classify the different volumes appearing on the scene and, depending on these, issue one warning signal or another.

Laser transmitters and sensors can be mounted in different parts of the facility, in order to guarantee the operation and maximise coverage. For example, laser transmitters can be mounted on the movable apparatuses themselves to monitor their environment.

As for the safety method, which is carried out with a system as previously described, comprising a series of steps, such as follows and wherein the system is used for:
configuring the orientation and position of the lidar, and setting boundaries for the washing bay and washing area, which is carried out during installation at the start of a vehicle washing cycle, obtaining a high-density 3D image of the entire bay in full detail using a high resolution image
   checking that the vehicle is within the established limits of the washing area or
   checking that there is no obstacle in the path of the machine,
defining the volume of the vehicle by means of the images obtained calculating the position of the recorded machine volume as a function of the position transmitted by the machine
obtaining cyclic images with lower dot density than the initial one, but with a higher response speed
removing already recorded volumes (vehicle as static volume and machine as dynamic volume) from the initial high-precision 3D scan by converting it into a monitored 3D scene
detecting a change in the volume of the monitored 3D scene, and optionally classifying the new volume of the monitored 3D scene according to its morphology
executing a safety sequence on the machine, e.g. slow down, pull out or stop; and issuing a warning signal; and
resuming operation of the washing apparatus, once the danger has disappeared

Other variants are set out in the separate claims and are described below.

### DESCRIPTION OF THE FIGURES

In order to complete the description and to help make the features of the invention more readily understandable, a set of figures and drawings is presented wherein the following is represented by way of illustration and not limitation:
Figure 1 is an upper schematic view of a first exemplary embodiment of the invention.
Figure 2 is a view of the point cloud generated by the lidar where the different bodies (washing machine, vehicle and people) can be observed: 2.1) starting position; 2.2) presence of a vehicle; 2.3) presence of a person and issuance of the alert actions.

### DETAILED EXPLANATION OF AN EMBODIMENT OF THE INVENTION

Several embodiments of the invention are briefly described below, as an illustrative and non-limiting example thereof.

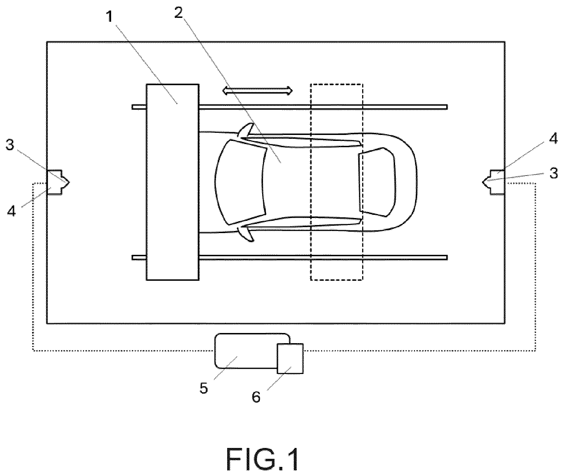

Figure 1 shows a diagram of an exemplary embodiment of the invention.

It is based on a washing tunnel with a series of internal apparatuses (1) arranged around a vehicle (2). The apparatuses (1) generally comprise bridges with rotating and movable brushes and a full range of nozzles for ejecting liquids, such as soapy water, and drying air.

Laser transmitters (3) and receivers (4), all controlled by a control unit (5), are arranged at various positions around the apparatuses (1). These transmitters (3) and receivers (4) form a lidar (a device for determining the distance from a laser emitter to an object or surface using a pulsed laser beam), sweeping the entire area over which the apparatuses (1) are moving with a certain margin around it. This lidar thus makes it possible to detect the presence of objects, usually people, in areas where they are not expected to appear. The system has a management interface (6), which may be arranged on the control unit (5) or arranged on remote computer equipment, the remote computer equipment and the control unit (5) being connected either wirelessly or by wiring.

The proposed system works in such a way that it initially performs the measurement of the environment to recognise the washing apparatuses (1), without the vehicle (2), and convert same into a movable prism to be taken into account when discretising the volume. In this first step, any fixed elements located in the surveillance area are also removed.

In a first step, prior to the start-up of the apparatuses (1), it can detect whether the vehicle (2) is incorrectly positioned, by checking whether it exceeds certain markings programmed in the control unit (5). Having checked the volume positioned within the corresponding area, the vehicle volume (2) is calibrated by approximating the point cloud of the vehicle (2) taken by the lidar to a static occupied volume. Knowing the location of the vehicle volumes (2) and washing apparatuses (1), these are removed from the surveillance area, resulting in an updated surveillance area. It should be noted that this surveillance area can be fixed or can be moved depending on the position of the apparatuses (1) as they move, or on any element present in the washing area.

During tunnel operation, the control unit (5) compares the position of the apparatuses (1) according to the washing phase, which can be received from the washing tunnel controller, and the position of the vehicle (2) with the elements detected by the lidar. If an unexpected object is detected, an alert is issued. This usually includes stopping the washing tunnel until an operator can check the occurrence, but may include other safety actions or sequences. The control unit (5) can also decide for itself which elements are apparatuses (1) or vehicle and which are external by recognising their shape from the lidar readings.

The control unit (5) may be the washing tunnel controller itself.

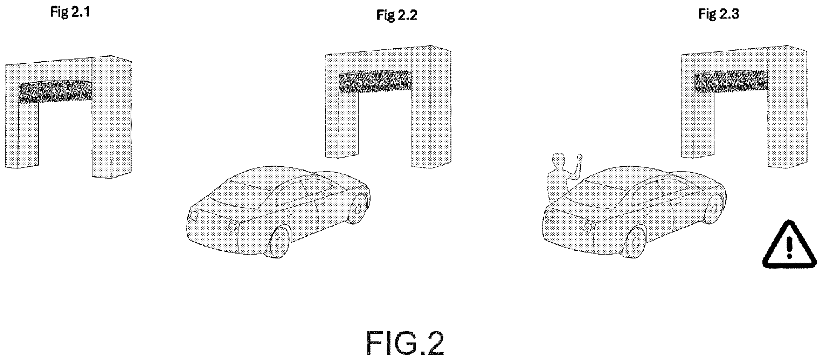

Figures 2.1 to 2.3 show how the lidar creates a point cloud over the different volumes, identifying changes with respect to the initial situation. In Figure 2.1 the lidar takes the volume of the machine creating a movable prism in the system that is taken into account with the movement of the machine. In Figure 2.2, the vehicle enters the facility and is detected by the lidar, creating a new volume in the system, for example, so it can be checked whether it is positioned correctly. Once the vehicle volume and the movable prism of the machine have been set, if a new volume appears (Figure 2.3), an alert and the corresponding safety sequence is triggered.

## Claims

1. A safety system for automatic vehicle washing facilities (2) comprising a series of movable apparatuses (1) in an area of influence of the apparatuses (1), **characterised in that** it comprises one or more lidar formed by a series of laser transmitters (3) and receivers (4), managed by a control unit (5), and configured for detecting the presence of objects or persons in the area of influence, and issuing an alert.

2. The system according to claim 1, comprising a management interface (6) in the control unit (5).

3. The system according to claim 1, comprising remote computer equipment in connection with the control unit (5) and wherein the remote computer equipment comprises a management interface (6).

4. A safety method in automatic vehicle washing facilities, comprising the use of a system according to any one of the preceding claims for:
configuring the orientation and position of the lidar, and setting boundaries for the washing bay and washing area, which is carried out during installation;
at the start of a vehicle washing cycle, obtaining a high-density 3D image of the entire bay in full detail using a high resolution image;
checking that the vehicle is within the established limits of the washing area or
checking that there is no obstacle in the path of the machine;
defining the volume of the vehicle by means of the images obtained;
calculating the position of the recorded machine volume as a function of the position transmitted by the machine;
obtaining cyclic images with lower dot density than the initial one, but with a higher response speed;
removing the already recorded volumes from the initial high-precision 3D scan by converting it into a monitored 3D scene;
detecting a change in the volume of the monitored 3D scene;
executing a safety sequence on the machine and issuing a warning signal; and
resuming operation of the washing apparatus, once the danger has disappeared.

5. The method according to claim 4, wherein after detecting a change in the volume of the monitored 3D scene, the new volume of the monitored 3D scene is classified according to its morphology.
